# EUROPÄISCHE PATENTSCHRIFT

(11) **EP 2 635 509 B1**
(45) Veröffentlichungstag und Bekanntmachung des Hinweises auf die Patenterteilung: **28.12.2016**
(21) Anmeldenummer: 11837290.3
(22) Anmeldetag: 26.10.2011
(51) Int. Cl.: B65G 1/137, B65G 57/06, B65G 57/24, B65B 11/02

(54) **VORRICHTUNG UND VERFAHREN ZUM SCHNELLEN ZUSAMMENSTELLEN VON KOMMISSIONSWARE FÜR DEN TRANSPORT**
DEVICE AND METHOD FOR QUICKLY GROUPING PICKED GOODS FOR TRANSPORT
DISPOSITIF ET PROCÉDÉ POUR REGROUPER RAPIDEMENT DES MARCHANDISES À EXPÉDIER

(30) Priorität: 05.11.2010 DE 102010050607
(43) Veröffentlichungstag der Anmeldung: 11.09.2013
(73) Patentinhaber: Grenzebach Maschinenbau GmbH, 86663 Asbach-Bäumenheim (DE)
(72) Erfinder: BAUMANN, Michael, 85774 Unterföhring (DE)
(74) Vertreter: Kindermann, Peter
(86) Internationale Anmeldenummer: PCT/DE2011/001899
(87) Internationale Veröffentlichungsnummer: WO 2012/062273

(56) Entgegenhaltungen:
- EP-A2- 0 218 833
- US-A- 5 701 722

## Beschreibung

Die vorliegende Erfindung betrifft eine Vorrichtung und ein Verfahren zum schnellen Zusammenstellen von Kommissionsware für den Transport.

In einer Vielzahl von Unternehmensbereichen, beispielsweise dem Handel mit Nahrungsmitteln, insbesondere Getränken, Molkereiprodukten, Genussmitteln, Ersatz- und Zubehörteilen sowie Industrie- und Haushaltsprodukten liegen Waren in sortenreinen Quellpaletten mit gleichartigen Gebinden vor, beispielsweise Getränkekisten oder Joghurtsteigen gleicher Geschmacksrichtung. Hieraus werden gemischte Zielpaletten zusammengestellt, die je nach Auftrag diverse unterschiedliche Gebinde enthalten, die sich in Sorte, Größe oder anderen Parametern unterscheiden.

Üblicherweise wird dabei eine sortenreine Quellpalette zunächst komplett vereinzelt und es werden ihre Gebinde in eigenen Puffern geordnet gelagert. Hierbei besteht der Nachteil, dass sehr große Puffer vorgesehen werden müssen, um alle Gebinde einer sortenreinen Quellpalette aufnehmen zu können. Da zur gemischten Palettierung für jede Gebindesorte wenigstens ein Puffer bereitgestellt werden muss, sind solche Anlagen nicht nur unflexibel, sondern weisen auch einen großen Platzbedarf auf.

Zur Zusammenstellung von Kommissionswaren wiederum sind Warengebinde mit einer Mehrzahl an gemischten Gebinden zusammen zu stellen.

Zur Zusammenstellung von Waren sind unter Anderem folgende Vorrichtungen bekannt geworden.

Aus der WO 2006/065090 A1 ist eine Vorrichtung zur Speicherung von Platten und deren Entladung bekannt, die einen beweglichen Rahmen mit einer Vielzahl von nebeneinander liegenden Haltern aufweist, die sich entlang einer X-Achse bewegen. Diese Halter werden von einem Lift vertikal bewegt und dienen der Aufnahme der Platten.

Die EP 1 986 941 B1 betrifft eine Pick-and-place-Vorrichtung zum Aufnehmen und Neupositionieren eines von einer Stützfläche getragenen Artikels. Zu diesem Zweck umfasst diese Vorrichtung einen ersten Teil, der einen Plattenabschnitt aufweist, der parallel zur Stützfläche beweglich ist, so dass ein vorderer Rand davon unter den Artikel, zwischen den Artikel und die Stützfläche eindringt. Zudem umfasst diese Vorrichtung ein Band aus flexiblem Material, das um mindestens den vorderen Rand des Plattenabschnitts gewickelt ist, so dass es zwischen der Platte und dem Artikel liegt, wenn die Platte darunter eindringt.

In der WO 2010/047595 A1 ist eine Vorrichtung zum Stapeln von Produkten auf Paletten oder Roll-Containern beschrieben, mit der Produkte unterschiedlicher geometrischer Abmessungen und Ausgestaltungen erfasst werden können. Diese Vorrichtung umfasst im Wesentlichen einen Greifer, der zwischen eine Lieferfläche und eine, das Produkt aufnehmende, Ladefläche bewegt werden kann, wobei der Greifer eine Reihe horizontal gelagerter parallel angeordneter Gabeln aufweist, die individuell gesteuert unter das Produkt geschoben werden.

Weiterhin ist aus der den Oberbegriff des unabhängigen Anspruchs 1 bildenden Druckschrift US 5 701 722 A eine Vorrichtung bekannt zum Packen und Einwickeln von Produkten auf Paletten.

Dem erfindungsgemäßen Verfahren, bzw. der entsprechenden Vorrichtung, liegt deshalb die Aufgabe zugrunde, eine Vorrichtung und ein Verfahren vorzustellen, mit dem Kommissionsware schnell zusammen gestellt und für den Transport bereit gestellt werden kann.

Diese Aufgabe wird mit einer Vorrichtung nach Anspruch 1 bzw. einem Verfahren nach Anspruch 8 gelöst.

Weitere Ausgestaltungen der Erfindung ergeben sich aus den Unteransprüchen.

Die erfindungsgemäße Vorrichtung wird im Folgenden näher beschrieben. Es zeigen dabei im Einzelnen:
- Fig.1:: eine Darstellung der erfindungsgemäßen Vorrichtung in der Draufsicht
- Fig.2:: eine Darstellung der erfindungsgemäßen Packweise
- Fig.3:: eine perspektivische Darstellung der erfindungsgemäßen Packweise
- Fig.3a:: eine ergänzende Darstellung zur Fig.3
- Fig.4:: eine Draufsicht einer Anordnung von Transportbändern
- Fig. 5:: eine Seitenansicht einer Transportband - Führung
- Fig.6:: eine Draufsicht auf ein Verteilungs - Zentrum
- Fig.7:: eine Darstellung der Befüllung bei einer alternativen Transportmethode
- Fig.7a:: eine ergänzende Darstellung zur Fig. 7

Die wesentliche Neuerung der vorliegenden Erfindung besteht darin, dass die in einer Lage zusammen zu stellenden Gebinde auf eine besondere Art und Weise so zusammen geschoben werden, dass sich ein Verbund ergibt der zwischen den Gebinden ein Minimum an Freiraum lässt. Eine solche, aus mehreren Gebinden gebildete Lage ist somit relativ fest gefügt und bildet deshalb eine gute und sichere Grundlage für die folgende Lage und insgesamt für eine aus mehreren Lagen gebildete Lieferung einer Kommissionsware.

Zudem gewährleistet eine besondere Anordnung von Sensoren eine schnelle Erfassung der individuellen Abmessungen und Pack - Parameter von Gebinden und somit eine schnelle Taktzeit für das Zusammenstellen einer bestimmten Lieferung.

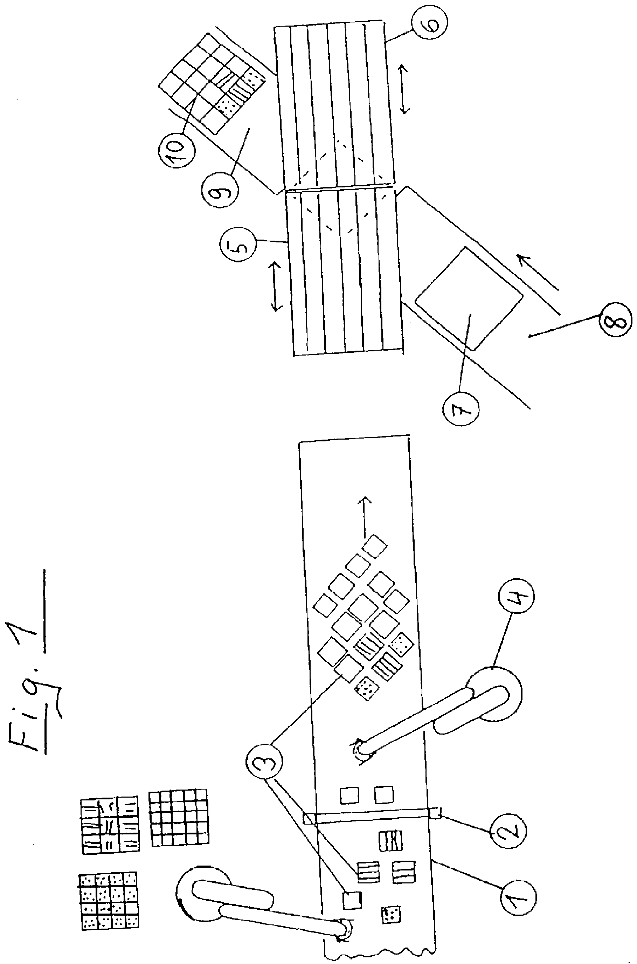

Die Fig.1 zeigt eine Darstellung der erfindungsgemäßen Vorrichtung in der Draufsicht. Auf der linken Hälfte ist schematisch ein Transportband 1 gezeigt, das zur Vorsortierung und Ausrichtung von Warengebinden 3 dient, die später in einer Warenlieferung zusammengestellt werden. Mittels der Detektiereinrichtung 2 werden an dieser Stelle die grundlegenden Abmessungen der Warengebinde 3, wie geometrische Abmessungen und Gewicht, ermittelt. Zu diesem Zweck können nicht nur diese geometrischen Abmessungen der Warengebinde 3 in der Draufsicht mittels der Detektiereinrichtung 2 erfasst werden, sondern auch, mittels einer, hier nicht sichtbaren, weiteren Einrichtung, deren Höhenprofil. Mittels weiterer, hier ebenfalls nicht gezeigter, zum Beispiel im Transportband integrierter Waagen, kann das Gewicht jedes Warengebindes 3 ermittelt werden. Die hierbei notwendige Arbeit des Vorsortierens wird mittels eines Sortierroboters 4 erledigt. Dieser Sortierroboter kann nach dem Ergreifen eines Warengebindes 3 auch selbst mittels einer eingebauten Einrichtung zur Gewichtsmessung dessen Gewicht ermitteln.

Die Arbeit des Sortierens kann mittels des Sortierroboters automatisch erfolgen, wobei steuerungstechnisch festgelegte Muster typischer Abmessungen und Gewichte von häufig vorkommenden Arten von Warengebinden 3 jeweils nach der Art der Branche, zur Beschleunigung der Datenverarbeitung, in Vorversuchen ermittelt werden (Mustererkennung, pattern recognition). Der Vorsortierung vorgeschaltet ist ein weiterer Sortierroboter ohne Bezeichnung, der für die individuelle Zusammenstellung von Kommissionsware die gewünschten Warengebinde 3 jeweils anderen Warengebinden entnimmt. Diese können sortenrein sein oder selbst auch eine gemischte Bestückung aufweisen.

Als weitere Ausgestaltung der Erfindung können zusätzliche Detektiereinrichtungen 2 vorgesehen sein, die das Ergebnis des Prozesses des Vorsortierens, wenn nötig noch mehrmals, überwachen.

Für die Zusammenstellung der Warengebinde werden Stapelbrücken benötigt. Auf der rechten Hälfte der Fig.1 sind jeweils eine linke Stapelbrücke 5 und eine rechte Stapelbrücke 3 dargestellt. Die hier aus Gründen der Übersichtlichkeit gezeichnete Lücke zwischen der linken Stapelbrücke 5 und dem Transportband 1 ist in der Praxis leicht überbrückbar. Sie kann mittels der linken Stapelbrücke 5 ohne weiteres überbrückt werden. Auf dem Laufband 8, erfolgt die Zuführung von Leer - Paletten 7. Der Transportweg 9 dient der Weiterführung von bestückten Paletten 10.

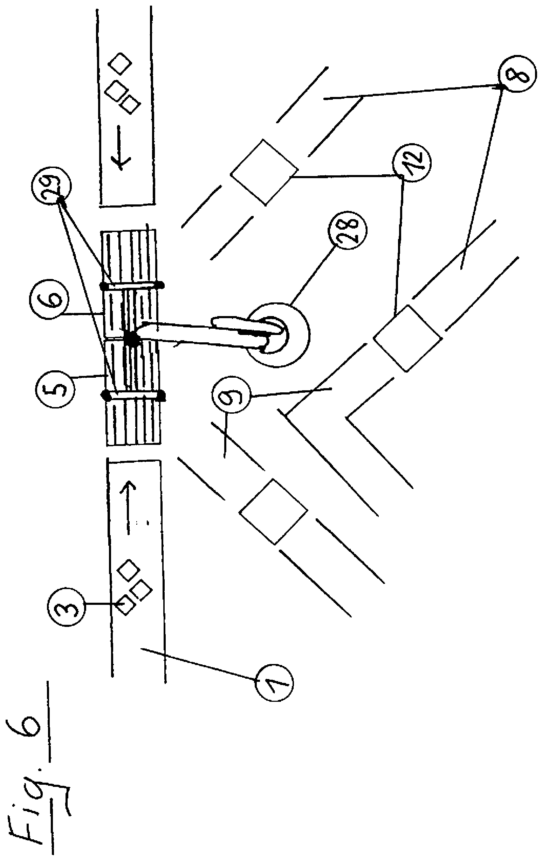

Die rechte Stapelbrücke 6 kann, jeweils nach den Erfordernissen, ebenso von einem Transportband 1 beliefert werden (vgl. Fig.6)

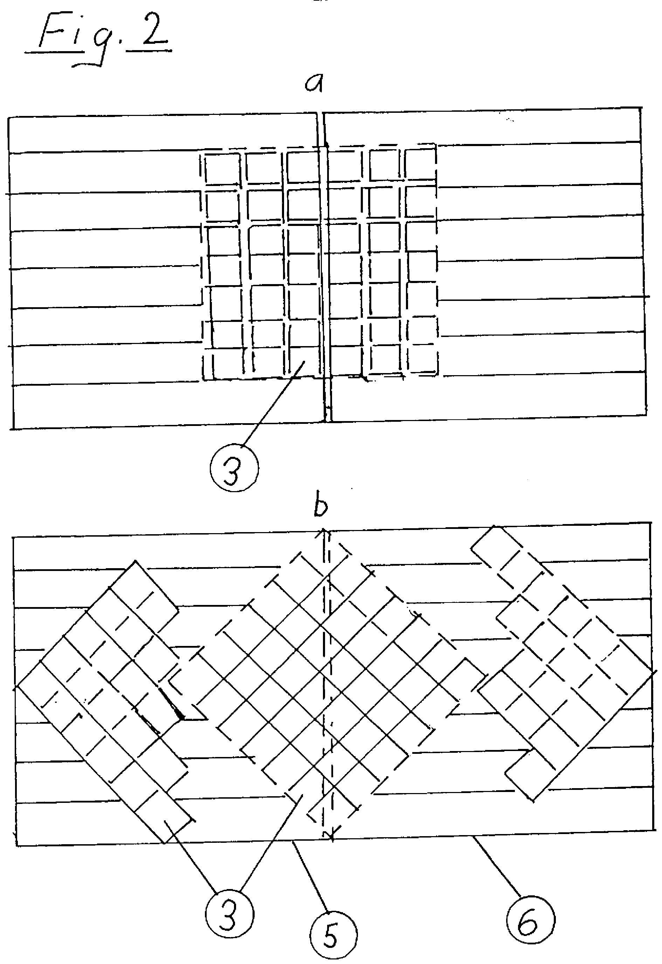

In der Fig. 2 ist eine schematische Darstellung der erfindungsgemäßen Packweise gezeigt. In der oberen Fig. 2a ist hierbei die herkömmliche Art und Weise der Zusammenstellung von Warengebinden 3 dargestellt.

Hier sind die einzelnen Warengebinde 3, in der vereinfachten Form von etwa quadratischen Flächen gezeichnet, so zusammengestellt, dass ihre Längsseiten, bzw. Querseiten parallel bzw. quer zu den Längsseiten der Stapelbrücken 5.6 ausgerichtet sind. Diese Zusammenstellung erfolgt mittels Transportbändern die, von oben betrachtet, als streifenförmige Flächen zu erkennen sind und die die Warengebinde 3 in der Richtung der Längsachsen der beiden Stapelbrücken aufeinander zu schieben. Diese Art der Zusammenstellung beschreibt den Stand der Technik.

Im Gegensatz dazu werden die Warengebinde 3 erfindungsgemäß gemäß Fig.2b so zusammen geschoben, dass die Diagonalen ihrer Grundflächen im Wesentlichen parallel zu den Längsachsen der Transportbänder verlaufen. Auf diese Weise ist gewährleistet, dass die Kraft die, die sich aufeinander zu bewegenden Transportbänder der beiden Stapelbrücken 5,6 in der Längsachse auf die Gesamtheit der Warengebinde 3 ausüben, so in zwei Kraftkomponenten aufgeteilt wird, dass diese die Gesamtheit der Ansammlung von Warengebinden 3 in zentripetaler Richtung fest zusammen drückt.

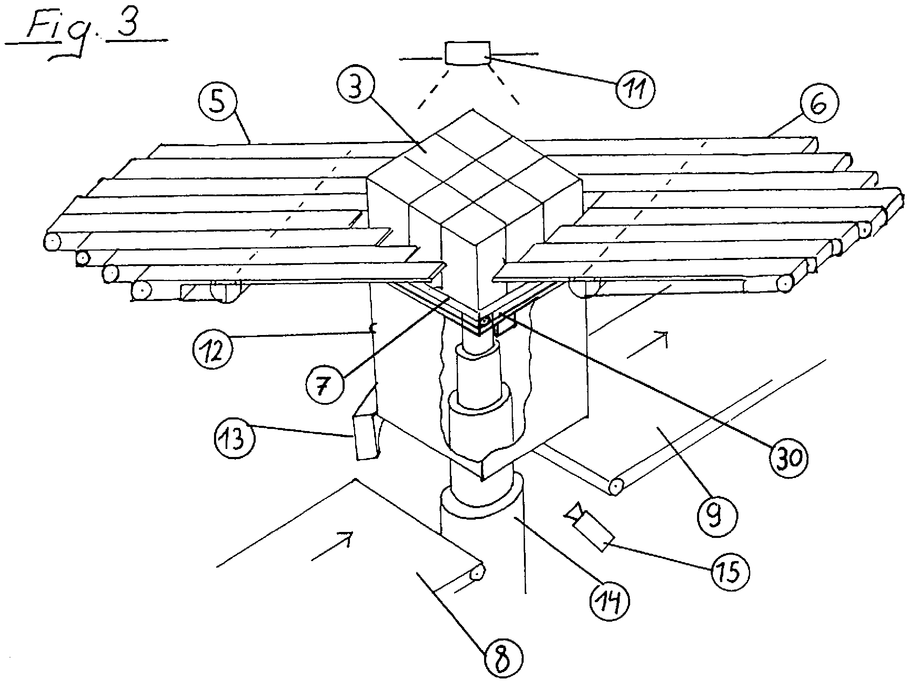

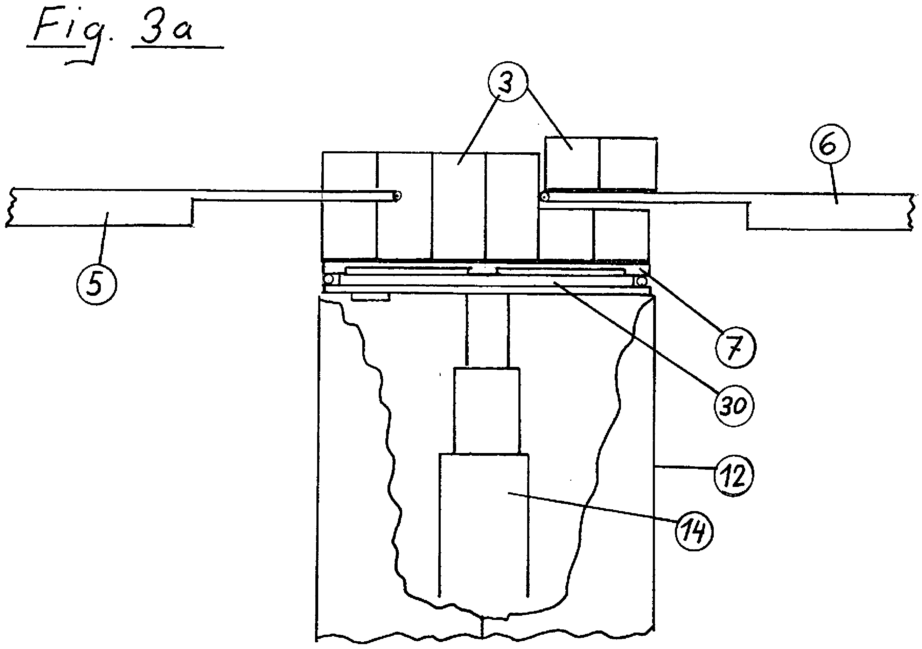

Die Fig. 3 zeigt eine perspektivische Darstellung der erfindungsgemäßen Packweise. In dieser Fig.3 sind eine linke Stapelbrücke 5 und eine rechte Stapelbrücke 6 zu erkennen, deren Transportbänder, entsprechend der zu ihrer Längsrichtung im Winkel von 45 Grad angeordneten, Gesamtheit der Warengebinde 3, unterschiedlich weit ausgefahren sind. In dieser Darstellung ist der Zeitpunkt festgehalten an dem die Gesamtheit dieser Lage von Warengebinden 3, hier vereinfacht als 9 würfelförmige Gebinde 3 dargestellt, mittels einer Hubeinrichtung 14 für Paletten in einen Stapelschacht 12 abgesenkt wird.

Diese Hubeinrichtung 14 verfügt über einen Hubboden 30 der im Wesentlichen aus einem oder mehreren Transportbändern mit einem eigenen Antrieb besteht.

Bei einer besonderen Ausgestaltung des Hubbodens 30 mit mindestens 2 parallel laufenden Transportbändern mit jeweils separatem Antrieb besteht die zusätzliche Möglichkeit das auf ihm befindliche Transportgut in der Laufrichtung zu korrigieren.

Das geschieht einfach dadurch, dass lediglich eines der mindestens 2 Transportbänder schneller oder langsamer läuft als das andere.

Auf diese Weise gelangt im normalen Betrieb die in der Fig.3 gezeigte Leer - Palette 7 von ihrer Zuführung 8 auf den Hubboden 30. Als fertig bestückte Palette besorgt der Hubboden 30 deren Weitertransport auf den Transportweg 9.

Beobachtet und kontrolliert wird dieser Vorgang von mindestens einer Einrichtung 11 die dem Detektieren und Scannen von Gebindelagen dient. Eine Mehrzahl von Einrichtungen 11 ist horizontal in zwei, aufeinander senkrecht stehenden, Achsen im Bereich der Hubeinrichtung 14 und der beiden Stapelbrücken 5,6 verfahrbar. Zur Gewinnung von Daten die der Übersicht dienen oder Kenntnis von Details der jeweiligen Warengebinde - Lage erfordern, ist jeweils eine Einrichtung 11 zusätzlich auch vertikal verfahrbar. Die Ergebnisse der verschiedenen Einrichtungen 11 ergänzen sich, da sich jeweils der Fokus einer Einrichtung 11 mit dem Fokus der benachbarten Einrichtung 11 überlappen kann. Auf diese Weise können zusätzliche Daten gewonnen werden die bei der Gesamtsteuerung der erfindungsgemäßen Vorrichtung verwertbar sind. Es können auch jeweils 2 benachbarte Einrichtungen 11 gezielt so gesteuert werden, dass aus ihren unterschiedlichen Beobachtungswinkeln spezielle Informationen bezüglich eines Warengebindes 3 gewonnen werden. Nähere Erläuterungen hierzu sind der Fig. 3a zu entnehmen.

Unterhalb des Stapelschachts 12 sind die Zuführung 8 von Leer - Paletten und der Transportweg 9 von bestückten Paletten diagonal verlaufend gezeigt.

Sind sämtliche Gebinde - Lagen einer Lieferung von Kommissionsware zusammengestellt, so kann die gesamte Lieferung mittels einer Folien - Wickeleinrichtung 13, hier schematisch gezeichnet, umwickelt werden. Der Kontrolle dieses Vorgangs dient eine Scan - Einrichtung 15.

Eine ergänzende Darstellung zur Fig.3 liefert die Fig. 3a. In dieser Figur sind die linke Stapelbrücke 5 und die rechte Stapelbrücke 6 in Verbindung mit einer Lage von Warengebinden 3, wie in der Fig.3 perspektivisch gezeichnet, von der Seite zu sehen. Auf diese Weise wird deutlich wie eine solche Lage aufgrund der Informationen über die geometrischen Abmessungen der Warengebinde 3, wie sie gemäß der Fig.1, linke Hälfte, gewonnen werden, steuerungstechnisch so zusammengesetzt wird, dass die obere Deckfläche einer solchen Lage eine möglichst sichere Basis für die darauf folgende Lage bildet. Beispielhaft ist in der Figur 3a idealisiert gezeigt, wie mittels der Transportbänder hohe und niedrige Warengebinde 3 von den Stapelbrücken (5,6) in einer Lage zusammengestellt werden können. Zusätzlich wird im gezeigten Fall die obere Lage der niedrigeren Warengebinde 3 nach dem Absetzen auf der entsprechenden unteren Lage mittels der diagonalen Stellung der Hubeinrichtung 14 dicht und nahezu fugenlos an die restlichen Warengebinde 3 angedrückt. Unter der Leer - Palette 7 sind der Hubboden 30 und die Hubeinrichtung 14 zu erkennen. Der Stapelschacht 12 bildet die äußere Begrenzung für die einzelnen Lagen der Warengebinde 3.

Das hier gezeigte Beispiel ist vereinfacht. In der Praxis ist die Steuerung der Anlage so programmiert, dass, neben der Berücksichtigung der jeweiligen Grundflächen, die Höhen der einzelnen Warengebinde 3 so zusammengestellt werden, dass sich eine möglichst ebene Fläche als Grundlage für die nächste Lage ergibt. Die Höhen der einzelnen Warengebinde 3 stehen somit als eine Art " Geländemodell der oberen Deckflächen der Warengebinde "der Steuerung der Anlage als Informationsbasis zur Verfügung. Zusätzlich wird bei der rechnertechnischen Ermittlung der optimalen Platzierung der Warengebinde einer Kommission in einer Lage, bzw. der Gesamtheit der Lagen, neben den geometrischen Abmessungen auch das Gewicht der einzelnen Warengebinde berücksichtigt.

In einer besonderen Ausgestaltung der Erfindung kann es vorgesehen sein, dass alle oder nur ein besonderer Anteil der Warengebinde mittels einer Kennzeichnung, zum Beispiel eines Bar - Codes, gekennzeichnet ist. Dies kann zum Beispiel erforderlich sein wenn ein Teil der Warengebinde besonders empfindlich oder leicht zerbrechlich ist und einer besonderen Behandlung bedarf. In einem solchen Fall erfordert zwar diese Codierung einen zusätzlichen Aufwand, jedoch kann sich dieser Aufwand programmtechnisch auszahlen.

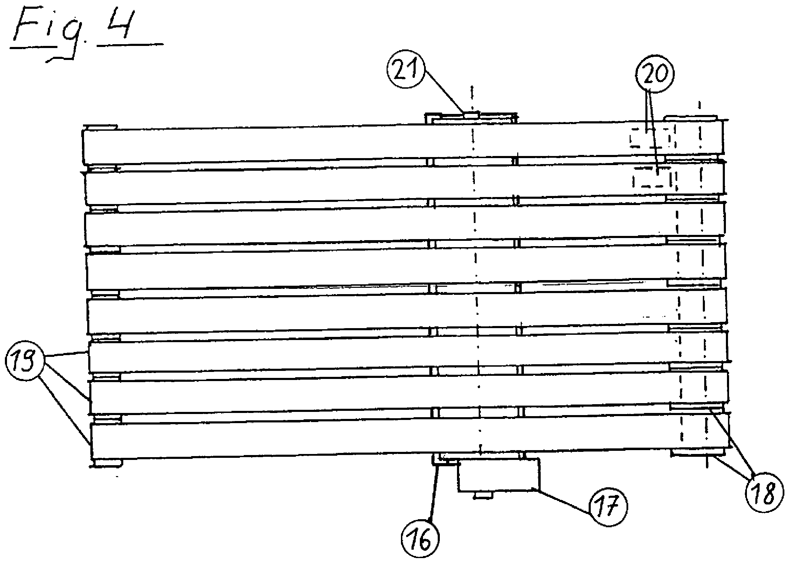

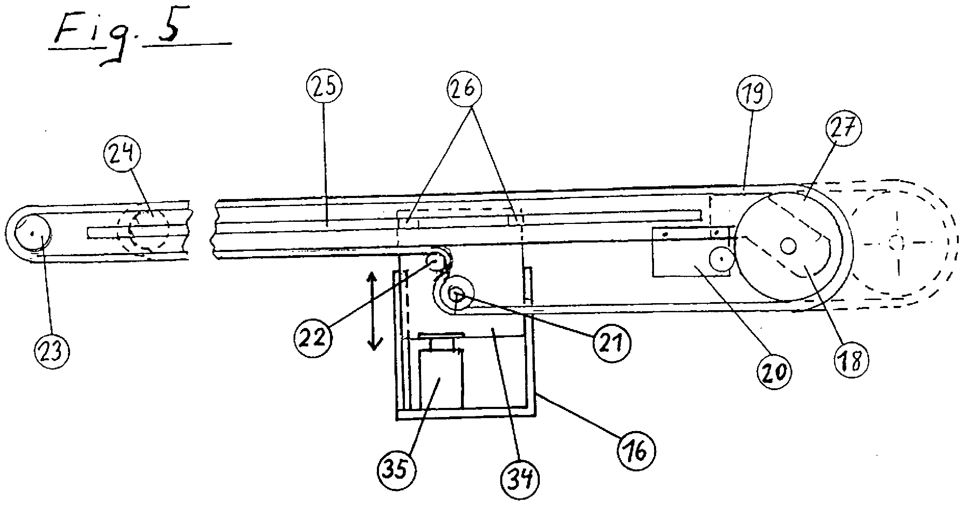

Die Fig. 4 zeigt eine Draufsicht einer Anordnung von Transportbändern als wesentlicher Teil einer Stapelbrücke. Hier sind beispielhaft 8 Transportbänder 19 mit einer, alle Transportbänder 19 verbindenden gemeinsamen Halterung 16 gezeigt. Die Halterung 16 stellt gleichzeitig die Basis der jeweiligen Stapelbrücke 5,6 dar. Die Funktionsweise einer Stapelbrücke 5,6 wird in der Hauptsache durch den jeweiligen Primärantrieb 17 und den individuellen Sekundärantrieb 20 jedes ihrerer einzelnen Transportbänder 19 bestimmt. Der Primärantrieb 17 erfolgt hierbei für alle Transportbänder der jeweiligen Stapelbrücke gemeinsam mittels der Antriebsachse 21. Für die oberen 2 Transportbänder 19 sind in der Fig.4 jeweils die Sekundärantriebe 20 und für die unteren 2 Transportbänder die Halterungen 18 des Antriebs für den Sekundärantrieb dargestellt. im Bereich der Halterung 16 sind die Umrisse der Vertikal - Hubschlitten 34 angedeutet, die bei der Beschreibung der Fig. 5 näher erläutert werden.

Die Fig.5 lässt die Seitenansicht einer Transportband - Führung erkennen aus der die Funktionsweise eines Transportbandes 19 deutlich wird.

Das eigentliche Transportband 19 stellt eine Endlosschleife dar die, angetrieben von der Antriebsachse 21 des Primärantriebs und umgelenkt mittels einer Umlenkrolle 22, über eine vordere Umlenkrolle 23 und ein, mittels einer Halterung 18 gelagertes, Antriebsrad 27 des Sekundärantriebs 20 zurück zur Antriebsachse 21 führt. Das Transportband 19 wird hierbei geführt von einer zungenförmigen Lafette 24, die, wie durch den Ausriss in der Fig.5 angedeutet, eine bestimmte, jedoch zweckmäßige, Länge aufweist. Diese Lafette 24 wird mittels ihrer Führungs - Nut 25 und die Nutensteine 26 in der Halterung 16 geführt und, hinsichtlich der Endpunkte ihrer Verfahrbarkeit, gleichzeitig begrenzt. Der Durchmesser des von der Antriebsachse 21 des Primärantriebs angetriebenen Antriebsrads steht in einem bestimmten Verhältnis zum Durchmesser des Antriebsrads 27 das mittels des Sekundärantriebs 20 angetrieben wird.

Entsprechen die Umdrehungszahlen dieser beiden Antriebsräder den unterschiedlichen Durchmessern im umgekehrten Verhältnis wird das Transportband gleichmäßig bewegt und die Lafette 24 bleibt deshalb in der jeweiligen, vor diesem Zustand eingenommenen, Position.

Dies ändert sich wenn sich die Drehzahlen des Primärantriebs 17 oder des Sekundärantriebs 20 in Relation zu dem vorher beschriebenen Zustand ändern. Auf diese Weise wird die Lafette 24 verlängert oder verkürzt bis zum jeweiligen Anschlag durch einen der Nutensteine 26. Es lässt sich somit durch die Steuerung der Geschwindigkeiten von Primärantrieb und Sekundärantrieb nicht nur ein Transportband 19 antreiben, sondern auch gleichzeitig die wirksame Länge seiner Lafette 24 verändern.

Es wird darauf hingewiesen, dass sich die Transportbänder 19 zur Erledigung ihrer Transportaufgaben vorwärts und rückwärts bewegen können.

In einer besonderen Ausgestaltung der Erfindung ist der Primärantrieb 17 der Transportbänder 19 nicht nur für alle Transportbänder einer Stapelbrücke gleich, sondern es ist zusätzlich für jedes Transportband jeweils ein eigener Primärantrieb vorgesehen der anstelle des gemeinsamen Primärantriebs angesteuert werden kann. Zusätzlich kann vorgesehen sein, dass jedes Transportband 19 separat in vertikaler Richtung mittels eines eigenen Vertikal - Hubschlittens 34 und seines Antriebs 35 in seiner Lage gesteuert veränderbar ist. Zusammen mit der Eigenschaft der Transportbänder 19 sich vorwärts oder rückwärts bewegen zu können, können die Warengebinde 3 somit einzeln von einem der Transportbänder 19 im Rahmen eines bestimmten Hubbereichs in jeder gewünschten Höhe verschoben oder sogar etwas gekippt, bzw. mit der Wirkung eines bestimmten Drehmoments bewegt werden.

Auf diese Weise lassen sich einzelne Warengebinde 3 noch zusätzlich gezielt verschieben.

Die Überwachung der Drehzahlen der einzelnen Antriebe und die Längenänderung, bzw. die absolute Länge, jeder Lafette erfolgt mittels Sensoren. Diese Sensoren sind aus Gründen der übersichtlichen Darstellung nicht dargestellt. Die Ausgangssignale dieser Sensoren liefern maßgebliche Betriebsparameter für die Steuerung der erfindungsgemäßen Vorrichtung.

Die Fig.6 zeigt eine Draufsicht auf ein Verteil - Zentrum das mit der erfindungsgemäßen Packweise ausgestattet ist.

Es ist hier auf der linken Seite ein Transportband 1 für Vorsortierung und Ausrichtung von Warengebinden 3 zu erkennen, dem auf der rechten Seite ein entsprechendes Transportband entspricht. Beide Transportbänder entsprechen dem in der Fig.1 erläuterten Standard.

In der Mitte dieses Verteil - Zentrums steht eine Schwenkeinrichtung 28 die in der Lage ist mittels eines Brückentors 29, das in der Funktion eine Transporthilfe darstellt, jeweils eine linke und eine rechte Stapelbrücke gemeinsam zu einem der beispielhaft gezeigten Stapelschächte 12 zu transportieren. Zu diesen Stapelschächten 12 werden jeweils Leer - Paletten 7 über eine Zuführung 8 zugeführt und von diesen werden ebenfalls bestückte Paletten 10 mittels eines Transportwegs 9 abgeführt.

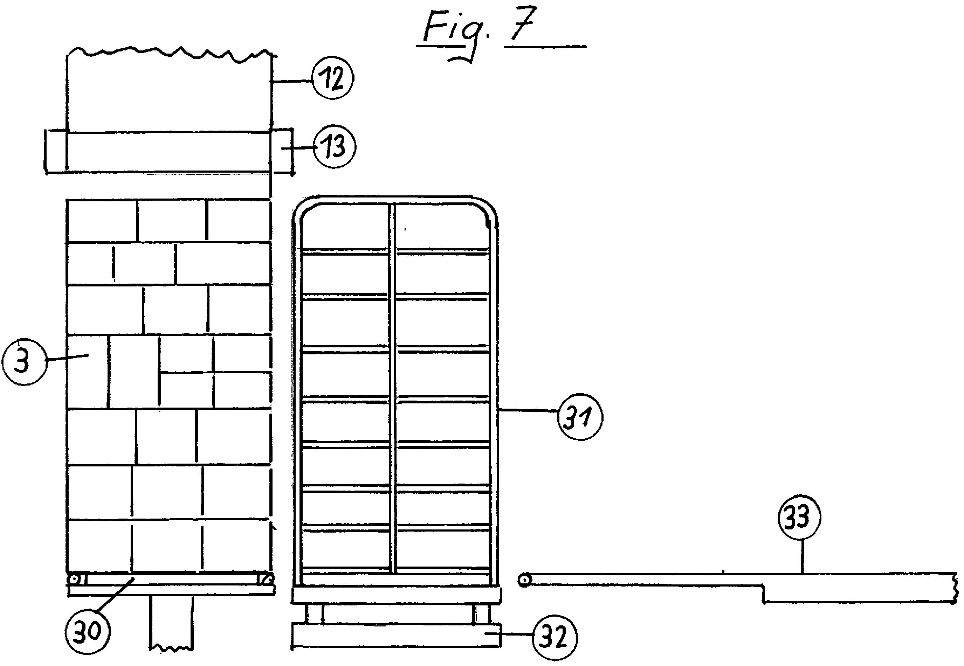

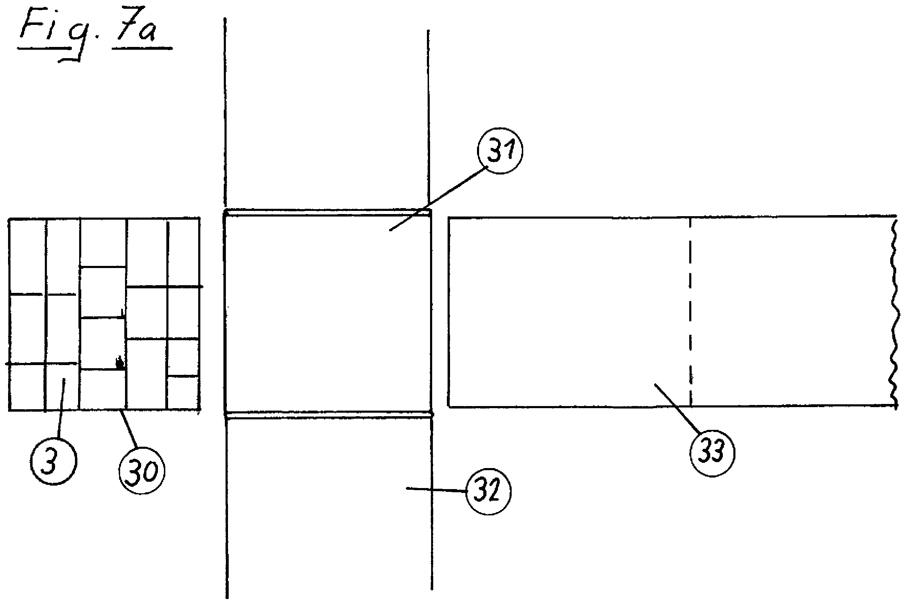

In der Fig. 7 ist eine Darstellung der Befüllung einer Leer - Palette mittels einer anderen Methode des Weitertransports gezeigt. Eine solche Palette 31 mit zwei Gitterwänden wird ebenfalls mit der erfindungsgemäßen Vorrichtung befüllt, jedoch wird die zusammengestellte Kommissionsware mittels des Hubbodens 30 und einer Stapelbrücke 33 auf eine Palette 31 mit zwei Gitterwänden verschoben. Diese Palette 31 wird dann mittels eines speziellen Transportbandes 32 weiter transportiert.

Die Fig.7a zeigt diesen Vorgang in der Draufsicht

Die Steuerung der komplexen Bewegungsvorgänge und die Signalverarbeitung der verwendeten Sensoren erfordert ein spezielles Steuerungsprogramm.

### Bezugszeichenliste

- 1: Transportband für Vorsortierung und Ausrichtung
- 2: Detektiereinrichtung bei der Vorsortierung
- 3: Warengebinde
- 4: Sortierroboter
- 5: Stapelbrücke links
- 6: Stapelbrücke rechts
- 7: Leer - Palette
- 8: Zuführung von Leer - Paletten
- 9: Transportweg von bestückten Paletten
- 10: bestückte Palette
- 11: Einrichtung zum Detektieren und Scannen von Gebinde - Lagen
- 12: Stapelschacht
- 13: Folien - Wickeleinrichtung
- 14: Hubeinrichtung für Paletten
- 15: Scan - Einrichtung der Folien - Wickeleinrichtung
- 16: Halterung einer Stapelbrücke
- 17: Primärantrieb (Transportband)
- 18: Halterung des Antriebsrads für den Sekundärantrieb
- 19: Transportband
- 20: Sekundärantrieb (Transportband)
- 21: Antriebsachse des Primärantriebs
- 22: Umlenkrolle (Transportband)
- 23: vordere Umlenkrolle (Transportband)
- 24: Lafette (Transportband)
- 25: Führungs - Nut der Lafette
- 26: Nutenstein (Lafettenführung)
- 27: Antriebsrad (Transportband)
- 28: Schwenkeinrichtung
- 29: Brückentor
- 30: Hubboden mit Transportband
- 31: Palette mit Gitterwänden
- 32: Transportband für Paletten (Gitterwand)
- 33: Stapelbrücke für Palettenbefüllung
- 34: Vertikal - Hubschlitten für ein Transportband 19
- 35: Antrieb für einen Vertikal - Hubschlitten 34

## Patentansprüche

1. Vorrichtung zum schnellen Zusammenstellen von Kommissionsware für den Transport mit einem System aus einer Transportanlage und einer Stapelanlage zum Stapeln der einzelnen Gebinde, welches System die folgenden Merkmale aufweist:
a) mindestens einen Förderer zur Vorsortierung und Ausrichtung von Warengebinden (3),
b) ein Paar gegenüberliegender, einander zuarbeitender, Stapelbrücken (5, 6) zum definierten Zusammenschieben von Warengebinden (3) zu einer Lage, bestehend aus einer Mehrzahl von Warengebinden (3),
c) eine Hubeinrichtung (14) zum Absenken einer Lage von Warengebinden (3) und Absetzen einer Lage auf eine Leer-Palette (7, 31) oder eine vorher abgesenkte andere Lage, wobei die Hubeinrichtung (14) einen Hubboden (30) aufweist,
d) eine Folien-Wickeleinrichtung (13) zum Umwickeln einer für den Transport fertig gestellten Lieferung von Kommissionsware,
**dadurch gekennzeichnet**,
e) dass der Förderer zur Vorsortierung und Ausrichtung von Warengebinden (3) ein Transportband (1) ist,
f) dass die Stapelbrücken (5, 6) jeweils aus einer Mehrzahl parallel verlaufender, fingerähnlicher Transportbänder (19) bestehen, die jeweils einzeln ausfahrbar, vorwärts und rückwärts bewegbar, und in ihrer wirksamen Länge definiert veränderbar sind, und wobei die Warengebinde (3) in der Richtung der Diagonalen ihrer Grundfläche zusammen geschoben werden, und
g) dass der Hubboden (30) eine Mehrzahl von integrierten Transportbändern (19) aufweist.

2. Vorrichtung nach Anspruch 1,
**dadurch gekennzeichnet,**
**dass** bei der Vorsortierung der Warengebinde (3) mittels einer Detektiereinrichtung (2) die geometrischen Abmessungen und mittels einer Wiege-Einrichtung das Gewicht jedes Warengebindes (3), sowie seine augenblickliche Lage ermittelt wird.

3. Vorrichtung nach einem der vorhergehenden Ansprüche,
**dadurch gekennzeichnet,**
**dass** mittels einer Mehrzahl an Einrichtungen (11) zum Detektieren und Scannen von Gebindelagen der gesamte Bereich der Hubeinrichtung (14) und der Stapelbrücken (5, 6) in der Draufsicht erfasst und überwacht wird, wobei auch vertikale Bewegungen der Einrichtung (11) im gesamten Bereich erfolgen.

4. Vorrichtung nach einem der vorhergehenden Ansprüche,
**dadurch gekennzeichnet,**
**dass** jedes Transportband (19) einer Stapelbrücke (5, 6) einen gemeinsamen Primärantrieb (17) und einen individuell ansteuerbaren Sekundärantrieb (20) aufweist.

5. Vorrichtung nach einem der vorhergehenden Ansprüche,
**dadurch gekennzeichnet,**
**dass** die Arbeit der Folien-Wickeleinrichtung (13) mittels einer Scan-Einrichtung (15) überwacht wird.

6. Vorrichtung nach einem der vorhergehenden Ansprüche,
**dadurch gekennzeichnet,**
**dass** zur Bestückung einer Palette (31) mit Gitterwänden eine zusätzliche Stapelbrücke (33) vorgesehen ist.

7. Vorrichtung nach Anspruch 4,
**dadurch gekennzeichnet,**
**dass** jedes Transportband (19) zusätzlich einen zuschaltbaren, separat ansteuerbaren, eigenen Primärantrieb (17) aufweist, wobei der normale Primärantrieb (17) unwirksam gemacht wird, und
**dass** jedes Transportband (19) separat in vertikaler Richtung mittels eines Vertikal-Hubschlittens (34) in seiner Lage gesteuert veränderbar ist.

8. Verfahren zum schnellen Zusammenstellen von Kommissionsware für den Transport, das ein System aus einer Transportanlage und einer Stapelanlage zum Stapeln der einzelnen Gebinde verwendet, das die folgenden Merkmale aufweist:
a) die zu einer Lieferung von Kommissionsware zusammen zu stellenden Warengebinde (3) werden mittels einer Detektiereinrichtung (2) hinsichtlich ihrer geometrischen Abmessungen, ihres Gewichts und ihrer Position erfasst und einer linken Stapelbrücke (5) oder einer rechten Stapelbrücke (6) zugeführt,
b) die für eine Lage bestimmten Warengebinde (3) werden mittels parallel laufender, einzeln ausfahrbarer, ansteuerbarer, und in der Geschwindigkeit und Laufrichtung steuerbarer, Transportbänder (19) als Bestandteile einer Stapelbrücke (5, 6) in der Richtung der Diagonalen ihrer Grundfläche zwischenraumfrei zu einer Lage zusammen geschoben,
c) die somit zusammen gestellte Lage wird mittels einer Hubeinrichtung (14) abgesenkt und auf eine Leer-Palette (7, 31) mittels einer Mehrzahl von, im Hubboden (30) integrierten, Transportbändern verschoben,
d) nach der Zusammenstellung der für eine Lieferung benötigten Lagen wird die Kommissionsware mittels einer Folien-Wickeleinrichtung (13) mit Folie umwickelt und über einen Transportweg (9, 32) dem Versand zugeführt.

9. Verfahren nach Anspruch 8,
**dadurch gekennzeichnet,**
**dass** der Vorgang des Zusammenstellens einer Lage mittels einer Mehrzahl von Einrichtungen (11) zum Detektieren und Scannen von Warengebinden (3) im gesamten Bereich der Hubeinrichtung (14) und der Stapelbrücken (5, 6) in der Draufsicht erfasst und ausgewertet wird, wobei die zusätzliche Bewegungsmöglichkeit der Einrichtung (11) in vertikaler Richtung der Erstellung eines Oberflächen-Profils in der Art eines Geländemodells, gebildet aus der Zusammenstellung der Oberflächen der voraussichtlich eingesetzten Warengebinde (3), dient.

10. Verfahren nach einem der Ansprüche 8 oder 9,
**dadurch gekennzeichnet,**
**dass** das Zusammenstellen von Warengebinden (3) dadurch erleichtert wird, dass jedes Transportband (19) zusätzlich einen zuschaltbaren eigenen Primärantrieb (17) aufweist, wobei der normale Primärantrieb (17) unwirksam gemacht wird, und dass jedes Transportband (19) separat in vertikaler Richtung mittels eines Vertikal-Hubschlittens (34) in seiner Lage gesteuert veränderbar ist.

11. Verfahren nach einem der Ansprüche 8 bis 10,
**dadurch gekennzeichnet,**
**dass** zur Bildung eines Verteil-Zentrums zusammengehörende Stapelbrücken (5, 6) über ein Brückentor (29) mechanisch verbunden werden und mittels einer Schwenkeinrichtung (28) einem von einer Mehrzahl von Stapelschächten (12) zugeführt werden.

## Claims

1. Device for quickly grouping picked goods for transport, having a system comprising a conveying unit and a stacking unit for stacking the individual containers, which system has the following features:
a) at least one conveyor for pre-sorting and aligning goods containers (3),
b) a pair of stacking bridges (5, 6) which lie opposite one another and work together for pushing goods containers (3) together in a defined manner to form a layer, consisting of a plurality of goods containers (3),
c) a lifting apparatus (14) for lowering a layer of goods containers (3) and placing a layer onto an empty pallet (7, 31) or onto another previously lowered layer, wherein the lifting apparatus (14) has a lifting base (30),
d) a film wrapping apparatus (13) for wrapping a shipment of picked goods completed for transport, **characterized**
e) **in that** the conveyor for pre-sorting and aligning goods containers (3) is a transport belt (1),
f) **in that** the stacking bridges (5, 6) consist in each case of a plurality of finger-like transport belts (19) which extend in parallel and are in each case individually extendable, movable forward and backward, and the effective length thereof is modifiable in a defined manner, and wherein the goods containers (3) are pushed together in the direction of the diagonals of their base surface, and
g) **in that** the lifting base (30) has a plurality of integrated transport belts (19).

2. Device according to Claim 1, **characterized in that** when the goods containers (3) are pre-sorted, the geometric dimensions are determined by means of a detecting apparatus (2) and the weight of each goods container (3) as well as its immediate position are determined by means of a weighing apparatus.

3. Device according to one of the preceding claims, **characterized in that** by means of a plurality of apparatuses (11) for detecting and scanning the container layers, the entire region of the lifting apparatus (14) and of the stacking bridges (5, 6) is detected and monitored in top view, wherein there are also vertical movements of the apparatus (11) in the entire region.

4. Device according to one of the preceding claims, **characterized in that** each transport belt (19) of a stacking bridge (5, 6) has a common primary drive (17) and an individually actuatable secondary drive (20).

5. Device according to one of the preceding claims, **characterized in that** the working of the film wrapping apparatus (13) is monitored by means of a scanning apparatus (15).

6. Device according to one of the preceding claims, **characterized in that** an additional stacking bridge (33) is provided for making-up a pallet (31) with lattice walls.

7. Device according to Claim 4, **characterized in that** each transport belt (19) additionally has its own connectable, separately actuatable primary drive (17), wherein the normal primary drive (17) is made ineffective, and **in that** the position of each transport belt (19) is modifiable separately in a controlled manner in the vertical direction by means of a vertical lifting carriage (34).

8. Method for quickly grouping picked goods for transport, which method uses a system comprising a conveying unit and a stacking unit for stacking the individual containers, which method has the following features:
a) the goods containers (3) to be grouped to form a shipment of picked goods are detected with regard to their geometric dimensions, their weight and their position by means of a detecting apparatus (2) and are supplied to a left-hand stacking bridge (5) or to a right-hand stacking bridge (6),
b) the goods containers (3) determined for one layer are pushed together in the direction of the diagonals of their base surface by means of transport belts (19), which extend in parallel, are individually extendible, actuatable and are controllable as regards speed and running direction, as component parts of a stacking bridge (5, 6), to form one layer without any gaps,
c) the layer, grouped in this way, is lowered by means of a lifting apparatus (14) and pushed onto an empty pallet (7, 31) by means of a plurality of transport belts which are incorporated in the lifting base (30),
d) once the layers required for a shipment have been grouped together, the picked goods are wrapped with a film by means of a film wrapping apparatus (13) and are supplied for dispatch by means of a conveying path (9, 32).

9. Method according to Claim 8, **characterized in that** the operation of grouping together a layer by means of a plurality of apparatuses (11) for detecting and scanning goods containers (3) is detected and evaluated in top view in the entire region of the lifting apparatus (14) and of the stacking bridges (5, 6), wherein the additional movement possibility of the apparatus (11) in the vertical direction serves to create a surface profile in the manner of a terrain model, formed from the grouping of the surfaces of the goods containers (3) expected to be used.

10. Method according to either of Claims 8 and 9, **characterized in that** the grouping of goods containers (3) is facilitated as a result of each transport belt (19) additionally having its own connectable primary drive (17), wherein the normal primary drive (17) is made ineffective, and **in that** the position of each transport belt (19) is modifiable separately in a controlled manner in the vertical direction by means of a vertical lifting carriage (34).

11. Method according to one of Claims 8 to 10, **characterized in that** to form a distributing center, associated stacking bridges (5, 6) are connected mechanically by means of a bridge gate (29) and are supplied to one of a plurality of stacking shafts (12) by means of a pivoting apparatus (28).

## Revendications

1. Dispositif pour regrouper rapidement des marchandises préparées à expédier avec un système composé d'une installation de transport et d'une installation d'empilage pour l'empilage des emballages individuels, ce système présentant les caractéristiques suivantes:
a) au moins un convoyeur pour le pré-triage et l'orientation d'emballages d'articles (3),
b) une paire de ponts d'empilage opposés (5, 6), opérant l'un vers l'autre, pour le rassemblement défini d'emballages d'articles (3) en une couche se composant d'une multiplicité d'emballages d'articles (3),
c) un dispositif de levage (14) pour abaisser une couche d'emballages d'articles (3) et déposer une couche sur une palette vide (7, 31) ou sur une autre couche abaissée antérieurement, dans lequel le dispositif de levage (14) présente un plancher de levage (30),
d) un dispositif d'enroulement de film (13) pour envelopper une livraison de marchandises préparées prête pour le transport,
**caractérisé en ce que**
e) le convoyeur destiné au pré-triage et à l'orientation d'emballages d'articles (3) est une bande transporteuse (1),
f) les ponts d'empilage (5, 6) se composent chacun d'une multiplicité de bandes transporteuses (19) s'étendant parallèlement l'une à l'autre à la manière de doigts, qui peuvent être déployées, déplacées vers l'avant et vers l'arrière chacune individuellement, et dont la longueur active peut être modifiée de façon définie, et dans lequel les emballages d'articles (3) sont rassemblés dans la direction des diagonales de leur face de base, et
g) le plancher de levage (30) présente une multiplicité de bandes transporteuses intégrées (19).

2. Dispositif selon la revendication 1, **caractérisé en ce que**, lors du pré-triage des emballages d'articles (3), on détermine pour chaque emballage d'article (3) les dimensions géométriques au moyen d'un dispositif de détection (2) et le poids au moyen d'un dispositif de pesage, ainsi que sa position instantanée.

3. Dispositif selon l'une quelconque des revendications précédentes, **caractérisé en ce que** toute la région du dispositif de levage (14) et des ponts d'empilage (5, 6) dans la vue en plan est détectée et surveillée au moyen d'une multiplicité de dispositifs (11) de détection et de scannage de couches d'emballages, dans lequel des mouvements verticaux du dispositif (11) se produisent également dans toute la région.

4. Dispositif selon l'une quelconque des revendications précédentes, **caractérisé en ce que** chaque bande transporteuse (19) d'un pont d'empilage (5, 6) présente un entraînement primaire commun (17) et un entraînement secondaire (20) à commande individuelle.

5. Dispositif selon l'une quelconque des revendications précédentes, **caractérisé en ce que** le travail du dispositif d'enroulement de film (13) est surveillé au moyen d'un dispositif de scannage (15).

6. Dispositif selon l'une quelconque des revendications précédentes, **caractérisé en ce qu'**il est prévu un pont d'empilage supplémentaire (33) pour l'équipement d'une palette (31) avec des parois grillagées.

7. Dispositif selon la revendication 4, **caractérisé en ce que** chaque bande transporteuse (19) présente en plus un entraînement primaire propre activable (17), à commande séparée, dans lequel l'entraînement primaire normal (17) est rendu inactif, et **en ce que** chaque bande transporteuse (19) peut être changée de position sur commande séparément en direction verticale au moyen d'un chariot de levage vertical (34).

8. Procédé pour regrouper rapidement des marchandises préparées à expédier, qui utilise un système composé d'une installation de transport et d'une installation d'empilage pour l'empilage des emballages individuels, qui présente les caractéristiques suivantes:
a) on détecte les dimensions, le poids et la position des emballages d'articles (3) à regrouper en vue d'une livraison de marchandises préparées au moyen d'un dispositif de détection (2) et on envoie les marchandises préparées à un pont d'empilage gauche (5) ou à un pont d'empilage droit (6),
b) on rassemble en une couche sans espaces intermédiaires dans la direction des diagonales de leur face de base les emballages d'articles (3) destinés à une couche, au moyen de bandes transporteuses (19) circulant parallèlement, pouvant être déployées et commandées individuellement et réglables en vitesse et en direction de déplacement qui font partie d'un pont d'empilage (5, 6),
c) on abaisse la couche ainsi regroupée au moyen d'un dispositif de levage (14) et on la glisse sur une palette vide (7, 31) au moyen d'une multiplicité de bandes transporteuses intégrées dans le plancher de levage (30),
d) après le regroupement des couches nécessaires pour une livraison, on enveloppe les marchandises préparées avec un film au moyen d'un dispositif d'enroulement de film (13) et on les transmet à l'expédition par un chemin de transport (9, 32).

9. Procédé selon la revendication 8, **caractérisé en ce que** l'on détecte et on évalue l'opération de regroupement d'une couche au moyen d'une multiplicité de dispositifs (11) de détection et de scannage d'emballages d'articles (3) dans toute la région du dispositif de levage (14) et des ponts d'empilage (5, 6) dans une vue en plan, dans lequel la possibilité de mouvement supplémentaire du dispositif (11) en direction verticale sert pour l'établissement d'un profil de surface à la manière d'un modèle de terrain, formé à partir du regroupement des surfaces des emballages d'articles (3) qu'il est prévu d'employer.

10. Procédé selon une des revendications 8 ou 9, **caractérisé en ce que** le regroupement des emballages d'articles (3) est facilité par le fait que chaque bande transporteuse (19) présente en outre un entraînement propre activable (17), dans lequel l'entraînement primaire normal (17) est rendu inactif, et **en ce que** chaque bande transporteuse (19) peut être changée de position séparément en direction verticale au moyen d'un chariot de levage vertical (34).

11. Procédé selon l'une quelconque des revendications 8 à 10, **caractérisé en ce que** des ponts d'empilage (5, 6) formant un ensemble sont reliés mécaniquement par une tour de pont (29) pour former un centre de distribution et sont envoyés au moyen d'un dispositif pivotant (28) à une multiplicité de puits d'empilage (12).
